# EUROPEAN PATENT APPLICATION

(11) **EP 4 653 188 A1**
(43) Date of publication of application: **26.11.2025**
(21) Application number: 24223824.4
(22) Date of filing: 31.12.2024
(51) Int. Cl.: B32B 27/06, B32B 3/08, B32B 5/18, B32B 7/12

(54) **HEAT INSULATION COMPONENT, BATTERY MODULE, AND BATTERY PACK**

(30) Priority: 20.05.2024 CN 202421102974 U; 18.06.2024 WO PCT/CN2024/099826
(71) Applicant: Eve Energy Storage Co., Ltd., Wuhan Hubei 430200 (CN)
(72) Inventor: ZHAO, Zhi, Hubei, 430200 (CN)
(74) Representative: Zacco GmbH

(57) **Abstract**

The some embodiments disclose a heat insulation component, including a buffer shaping frame (11), an aerogel part (12), and a release film component (13), wherein the buffer shaping frame (11) is a ring-shaped frame structure; the aerogel part (12) is embedded inside the buffer shaping frame (11); and the release film component (13) includes a first release film (131) and a second release film (132), and the aerogel part (12) is arranged between the first release film (131) and the second release film (132).

## Description

### Cross-Reference to Related Application

The present invention claims the priority of the Chinese patent application with the application number 2024211029746 filed to the China National Intellectual Property Administration on May 20, 2024 and the priority of the PCT International Application No. PCT/CN2024/099826 filed on June 18, 2024.

### Technical Field

The present invention relates to the field of batteries, and in particular relates to a heat insulation component, a battery module, and a battery pack.

### Background

As an excellent heat insulation material, aerogel is currently widely used in battery modules. Usually used as a heat insulation pad between cells, aerogel may effectively reduce battery temperature and improve the efficiency and stability of an energy storage system.

### Summary

### Technical problem

Aerogel is not as good as foam and silica gel in compressibility and resilience. Some aerogels even produce plastic deformation after compression and may not rebound, resulting in small pre-tightening force after a battery module is assembled and molded, and affecting the overall assembly size of the battery module and the cycle index of cells.

### Technical solution

According to some embodiments of the present invention, the some embodiments provide a heat insulation component, including:
a buffer shaping frame, being a ring-shaped frame structure;
an aerogel part, being embedded inside the buffer shaping frame; and
a release film component, including a first release film and a second release film, and the aerogel part is arranged between the first release film and the second release film.

According to an embodiment, the embodiment provides a battery module, including one or more of the aforementioned heat insulation components and one or more cell units, with one heat insulation component arranged between every two adjacent cell units of the more cell units.

According to an embodiment, the embodiment provides a battery pack, including the aforementioned battery module.

### Beneficial effect

The some embodiment provide the aerogel part inside the buffer shaping frame, and uses the first release film and the second release film for packaging, so that the aerogel part may be stably combined with the buffer shaping frame into a whole. Under the effect of the buffer shaping frame, the deformation of the aerogel part is reduced, the problem that the existing aerogel is deformed after being compressed, resulting in small pre-tightening force of the battery module is solved, the overall assembly size of a battery module and the cycle index of cells are ensured, the yield of battery module assemblies is improved, and the rework cost is reduced.

### Brief Description of the Drawings

FIG. 1 is an exploded schematic structural diagram of a heat insulation component as described in the embodiment.
FIG. 2 is an overall schematic structural diagram of the heat insulation component as described in the embodiment.
FIG. 3 is a split structural diagram of a buffer shaping frame and an aerogel part as described in the embodiment.

Numerals in the figures: 1- heat insulation component, 11- buffer shaping frame, 111- first inner abutting surface, 112- second inner abutting surface, 113- buffer contact surface, 114- shaping frame inner cavity, 12- aerogel part, 121- first aerogel surface, 122- second aerogel surface, 123-third aerogel surface, 13- release film component, 131- first release film , 132- second release film , 133- first film lug, 134- second film lug, 141- first flame-retardant adhesive, 142- second flame-retardant adhesive.

### Detailed Description of the Embodiments

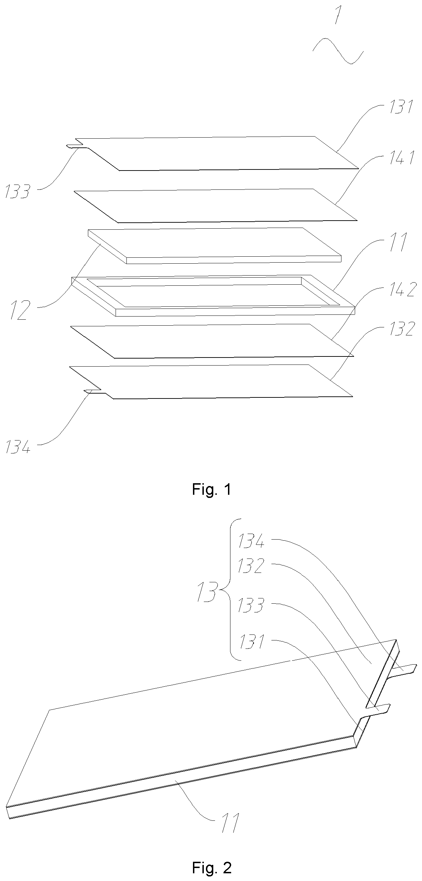

Specifically, referring to FIG. 1 to FIG. 3, the embodiment discloses a heat insulation component 1, including a buffer shaping frame 11 and an aerogel part 12. The buffer shaping frame 11 is a ring-shaped frame structure, which may be a rectangular ring or a circular ring, or a ring structure with a shape set according to design requirements. The aerogel part 12 is rectangular, and in an embodiment, the aerogel part 12 has a first aerogel surface 121, a second aerogel surface 122, and a third aerogel surface 123. The first aerogel surface 121 is the side with the largest area in the aerogel part 12, so the direction perpendicular to the first aerogel surface 121 is the thickness direction of the aerogel part 12. The second aerogel surface 122 is vertically connected to the first aerogel surface 121, and both the first aerogel surface 121 and the second aerogel surface 122 are vertically connected to the third aerogel surface 123.

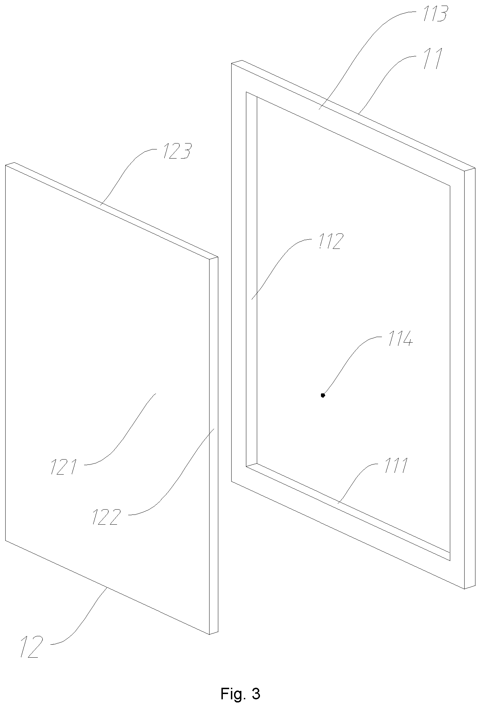

It can be understood that when the lengths of the four sides of the first aerogel surface 121 are the same, the area of the second aerogel surface 122 is equal to the area of the third aerogel surface 123. As shown in FIG. 3, when the first aerogel surface 121 is rectangular, the second aerogel surface 122 corresponds to the long side of the first aerogel surface 121, the third aerogel surface 123 corresponds to the short side of the first aerogel surface 121, and thus the area of the second aerogel surface 122 is greater than the area of the third aerogel surface 123.

In some embodiments, as shown in FIG. 3, the buffer shaping frame 11 is provided with a buffer contact surface 113, a shaping frame inner cavity 114, and a first inner abutting surface 111 and a second inner abutting surface 112 arranged in the shaping frame inner cavity 114. The buffer contact surface 113 is the side of the buffer shaping frame 11 in a square ring shape, and the direction perpendicular to the buffer contact surface 113 is the thickness direction of the buffer shaping frame 11. The first inner abutting surface 111 is configured for abutting and contacting with the third aerogel surface 123, and the second inner abutting surface 112 is configured for abutting and contacting with the second aerogel surface 122.

In some embodiments, the aerogel part 12 is embedded in the shaping frame inner cavity 114 of the buffer shaping frame 11. In some embodiments, the first inner abutting surface 111 of the buffer shaping frame 11 abuts and contacts with the third aerogel surface 123 of the aerogel part 12, and the second inner abutting surface 112 of the buffer shaping frame 11 abuts and contacts with the second aerogel surface 122 of the aerogel part 12. In an embodiment, the first inner abutting surface 111 of the buffer shaping frame 11 abuts and contact with the third aerogel surface 123 of the aerogel part 12, orthe second inner abutting surface 112 of the buffer shaping frame 11 abuts and contact with the second aerogel surface 122 of the aerogel part 12, and the aerogel part 12 is embedded and fixed inside the buffer shaping frame 11.

It should be noted that the first inner abutting surface 111 of the buffer shaping frame 11 is bonded and fixed to the third aerogel surface 123 of the aerogel part 12 by a flame-retardant double-sided adhesive, and the second inner abutting surface 112 of the buffer shaping frame 11 is bonded and fixed to the second aerogel surface 122 of the aerogel part 12 by a flame-retardant double-sided adhesive, thereby ensuring the stability of assembly between the buffer shaping frame 11 and the aerogel part 12.

It should also be noted that the aforementioned buffer shaping frame 11 is a frame structure made of a buffer material which is silicone or foam, so that the buffer shaping frame 11 of the heat insulation component 1 may withstand force and buffer acting force and/or impact thereon when the heat insulation component 1 is assembled between two adjacent cell units.

In the embodiment, taking advantage of a good rebound characteristic of the buffer shaping frame 11, when the two adjacent cell units produce an extrusion acting force on the heat insulation component 1, the buffer shaping frame 11 may prevent the aerogel part 12 from producing excessive deformation, and make the aerogel part 12 maintain relatively small and stable deformation. Also, a portion of the acting force from the cell units is applied to the buffer contact surface 113 of the buffer shaping frame 11. That is, in the assembly process, the large surface of a battery of a cell unit mainly acts on the buffer contact surface 113 of the buffer shaping frame 11, thus reducing deformation of the aerogel part 12. Therefore, the heat insulation component 1 may not produce excessive deformation or plastic deformation as a whole, the problem of small pre-tightening force when the heat insulation component 1 is assembled in the battery module is solved, and the overall assembly size of the battery module and the cycle index of the cells are ensured.

In some embodiments, a first thickness of the aerogel part 12 in an original state is smaller than a shaped thickness of the buffer shaping frame 11 in a compressed deformation state. The original state is a state in which the aerogel part 12 is under no force and keeps the original shape. That is, after the heat insulation component 1 is assembled to the battery module and a pre-tightening force is applied, the first thickness of the aerogel part 12 is smaller than a shaped thickness of the buffer shaping frame 11. At this time, the aerogel part 12 does not produce compression deformation. Thus, deformation of the aerogel part 12 under an extrusion force is further reduced, thereby ensuring that the aerogel part 12 does not affect compression of the buffer shaping frame 11 during use of the heat insulation component 1, and effectively ensuring the service stability of the heat insulation component 1.

In some embodiments, a second thickness of the aerogel part 12 in an original state is smaller than an original thickness of the buffer shaping frame 11 in a deformation restore state. The original state is a state in which the aerogel part 12 is under no force and keeps the original shape. That is, before the heat insulation component 1 is assembled to the battery module, or when the heat insulation component 1 is in an incoming state, the second thickness of the aerogel part 12 is smaller than an original thickness of the buffer shaping frame 11. Thus, the aerogel part 12 will not produce deformation in an assembly process, and the aerogel part 12 does not affect compression of the buffer shaping frame 11 during use of the heat insulation component 1, thereby effectively ensuring the service stability of the heat insulation component 1.

In some embodiments, specifically referring to FIG. 1 and FIG. 2, the heat insulation component 1 further includes a release film component 13, including a first release film 131 and a second release film 132, and the aerogel part 12 is arranged between the first release film 131 and the second release film 132. That is, the first release film 131 and the second release film 132 are configured for packaging the buffer shaping frame 11 and the aerogel part 12. In the packaging process, air between the first release film 131 and the aerogel part 12, between the second release film 132 and the aerogel part 12, between the first release film 131 and the buffer shaping frame 11, and between the second release film 132 and the buffer shaping frame 11 is extracted to ensure closer fit therebetween.

In some embodiments, specifically referring to FIG. 1 and FIG. 2, the heat insulation component 1 further includes a first flame-retardant adhesive 141 and a second flame-retardant adhesive 142, which are flame-retardant double-sided adhesive layers. The first flame-retardant adhesive 141 covers the buffer shaping frame 11 and the aerogel part 12, and the buffer shaping frame 11 and the aerogel part 12 are both adhered to the first release film 131 by the first flame-retardant adhesive 141. The second flame-retardant adhesive 142 covers the buffer shaping frame 11 and the aerogel part 12, and the buffer shaping frame 11 and the aerogel part 12 are both adhered to the second release film 132 by the second flame-retardant adhesive 142.

In some embodiments, the first flame-retardant adhesive 141 covers the buffer shaping frame 11, and the first release film 131 is bonded to the buffer shaping frame 11 by the first flame-retardant adhesive 141. The second flame-retardant adhesive 142 covers the buffer shaping frame 11, and the second release film 132 is bonded to the buffer shaping frame 11 by the second flame-retardant adhesive 142.

In some embodiments, the first flame-retardant adhesive 141 covers the aerogel part 12, and the first release film 131 is bonded to the aerogel part 12 by the first flame-retardant adhesive 141. The second flame-retardant adhesive 142 covers the aerogel part 12, and the second release film 132 is bonded to the aerogel part 12 by the second flame-retardant adhesive 142.

Thus, the first flame-retardant adhesive 141 is within the coverage of the first release film 131, and the second flame-retardant adhesive 142 is within the coverage of the second release film 132. Therefore, the first release film 131 may ensure the effectiveness of the first flame-retardant adhesive 141 and the flame-retardant double-sided adhesive between the buffer shaping frame 11 and the aerogel part 12, as well as the cleanness of the side of the buffer shaping frame 11 and the aerogel part 12 close to the first release film 131. The second release film 132 may ensure the effectiveness of the second flame-retardant adhesive 142 and the flame-retardant double-sided adhesive between the buffer shaping frame 11 and the aerogel part 12, as well as the cleanness of the side of the buffer shaping frame 11 and the aerogel part 12 close to the second release film 132.

An unexpected effect is that the cooperation between the first release film 131 and the second release film 132 of the release film component 13 may further firmly fix the aerogel part 12 in the buffer shaping frame 11, prevent the aerogel part 12 from detaching from the buffer shaping frame 11, and also shape the aerogel part 12 in the buffer shaping frame 11, so as to prevent the aerogel part 12 from deformation before or when installed in a battery module. In addition, after the first release film 131 and the second release film 132 are peeled off, under the effect of the first flame-retardant adhesive 141 and the second flame-retardant adhesive 142, the aerogel part 12 and the buffer shaping frame 11 still may be combined stably.

When the heat insulation component 1 is used, the release film component 13 is to be peeled off from the buffer shaping frame 11 and the aerogel part 12, and the large surface of a battery of a cell unit directly acts on the buffer shaping frame 11 and the aerogel part 12. Preferably, the first flame-retardant adhesive 141 of the heat insulation component 1 is bonded to the large surface of a battery of one cell unit, and the second flame-retardant adhesive 142 of the heat insulation component 1 is bonded to the large surface of a battery of another cell unit, so that the heat insulation component 1 is not easily detached from a battery module, the assembly compactness of the battery module is ensured, and also, heat spread of a cell unit in a thermal runaway state may be effectively blocked.

In some embodiments, specifically referring to FIG. 1 and FIG. 2, a first film lug 133 protruding towards an outside of the buffer shaping frame 11 is formed on the first release film 131, and a second film lug 134 protruding towards the outside of the buffer shaping frame 11 is formed on the second release film 132.

In some embodiments, the first film lug 133 and the first release film 131 are formed as a whole, and in another embodiment, the first film lug 133 is attached to the first release film 131. In some embodiments, preferably the second film lug 134 and the second release film 132 are formed as a whole, and in another embodiment, the second film lug 134 is attached to the second release film 132.

Thus, the first release film 131 is convenient to peel off under the effect of the first film lug 133. The second release film 132 is convenient to peel off under the effect of the second film lug 134.

Based on the structure and connection relationship of the aforementioned heat insulation component 1, the inventor further discloses a battery module, including one or more heat insulation components 1 and one or more cell units, with one heat insulation component 1 arranged between every two adjacent cell units. Thus, the aerogel part 12 of the heat insulation component 1 may effectively isolate heat transmission between the two adjacent cell units, and the buffer shaping frame 11 of the heat insulation component 1 may withstand the acting force from the two adjacent cell units in the assembly process, and reduce the acting force on the aerogel part 12, thereby ensuring the overall pre-tightening force of a battery module.

In the assembly and use processes of the heat insulation component 1, the release film component 13 is peeled off, so that the cell unit is bonded to the first flame-retardant adhesive 141 of the heat insulation component 1, and also, the cell unit is bonded to the second flame-retardant adhesive 142 of the heat insulation component 1. With the first flame-retardant adhesive 141 and the second flame-retardant adhesive 142 of the heat insulation component 1, not may the safety of the battery module be effectively ensured, but also the firmness of the integral assembly of the battery module may be improved.

In addition, based on the aforementioned battery module, the embodiment also discloses a battery pack, including the aforementioned battery module.

## Claims

1. A heat insulation component (1), comprising:
a buffer shaping frame (11), being a ring-shaped frame structure;
an aerogel part (12), being embedded inside the buffer shaping frame (11); and
a release film component (13), comprising a first release film (131) and a second release film (132), and the aerogel part (12) is arranged between the first release film (131) and the second release film (132).

2. The heat insulation component (1) as claimed in claim 1, further comprising a first flame-retardant adhesive (141) and a second flame-retardant adhesive (142), wherein the buffer shaping frame (11) and/or the aerogel part (12) is adhered to the first release film (131) by the first flame-retardant adhesive (141), and the buffer shaping frame (11) and/or the aerogel part (12) is adhered to the second release film (132) by the second flame-retardant adhesive (142).

3. The heat insulation component (1) as claimed in claim 2, wherein the first flame-retardant adhesive (141) is within a coverage of the first release film (131), and the second flame-retardant adhesive (142) is within a coverage of the second release film (132).

4. The heat insulation component (1) as claimed in claim 1, or 2, or 3, wherein a first film lug (133) protruding towards an outside of the buffer shaping frame (11) is formed on the first release film (131).

5. The heat insulation component (1) as claimed in claim 1, or 2, or 3, wherein a second film lug (134) protruding towards an outside of the buffer shaping frame (11) is formed on the second release film (132).

6. The heat insulation component (1) as claimed in claim 1, wherein a first thickness of the aerogel part (12) in an original state is smaller than a shaped thickness of the buffer shaping frame (11) in a compressed deformation state, and the original state is a state in which the aerogel part (12) is under no force and keeps the original shape.

7. The heat insulation component (1) as claimed in claim 1, wherein a second thickness of the aerogel part (12) in an original state is smaller than an original thickness of the buffer shaping frame (11) in a deformation restore state, and the original state is a state in which the aerogel part (12) is under no force and keeps the original shape.

8. The heat insulation component (1) as claimed in claim 1, or 2, or 3, or 6, or 7, wherein the buffer shaping frame (11) is a frame structure made of silicone or foam.

9. The heat insulation component (1) as claimed in claim 2, wherein the first flame-retardant adhesive (141) covers the buffer shaping frame (11), and the first release film (131) is bonded to the buffer shaping frame (11) by the first flame-retardant adhesive (141), the second flame-retardant adhesive (142) covers the buffer shaping frame (11), and the second release film (132) is bonded to the buffer shaping frame (11) by the second flame-retardant adhesive (142).

10. The heat insulation component (1) as claimed in claim 2, wherein the first flame-retardant adhesive (141) covers the aerogel part (12), and the first release film (131) is bonded to the aerogel part (12) by the first flame-retardant adhesive (141), the second flame-retardant adhesive (142) covers the aerogel part (12), and the second release film (132) is bonded to the aerogel part (12) by the second flame-retardant adhesive (142).

11. The heat insulation component (1) as claimed in claim 4, wherein the first film lug (133) and the first release film (131) are formed as a whole, or the first film lug (133) is attached to the first release film (131).

12. The heat insulation component (1) as claimed in any one of claims 1 to 11, wherein the aerogel part (12) has a first aerogel surface (121), a second aerogel surface (122) and a third aerogel surface (123), the first aerogel surface (121) is a side with the largest area in the aerogel part (12), and a direction perpendicular to the first aerogel surface (121) is a thickness direction of the aerogel part (12), the second aerogel surface (122) is vertically connected to the first aerogel surface (121), and both the first aerogel surface (121) and the second aerogel surface (122) are vertically connected to the third aerogel surface (123).

13. The heat insulation component (1) as claimed in claim 12, wherein the buffer shaping frame (11) is provided with a buffer contact surface (113), a shaping frame inner cavity (114), and a first inner abutting surface (111) and a second inner abutting surface (112) arranged in the shaping frame inner cavity (114), and a direction perpendicular to the buffer contact surface (113) is a thickness direction of the buffer shaping frame (11), the first inner abutting surface (111) is configured for abutting and contacting with the third aerogel surface (123), and the second inner abutting surface (112) is configured for abutting and contacting with the second aerogel surface (122).

14. A battery module, comprising:
one or more heat insulation components (1) according to any one of claims 1 to 13; and
one or more cell units, with one heat insulation component (1) arranged between every two adjacent cell units of the more cell units.

15. A battery pack, comprising the battery module as claimed in claim 14.
